# EUROPÄISCHE PATENTSCHRIFT

(11) **EP 2 417 019 B1**
(45) Veröffentlichungstag und Bekanntmachung des Hinweises auf die Patenterteilung: **04.05.2016**
(21) Anmeldenummer: 10703848.1
(22) Anmeldetag: 09.02.2010
(51) Int. Cl.: B63H 5/125, B63H 21/20

(54) **SCHIFFSANTRIEB**
SHIP PROPULSION SYSTEM
PROPULSION DE NAVIRE

(30) Priorität: 07.04.2009 DE 102009002263
(43) Veröffentlichungstag der Anmeldung: 15.02.2012
(73) Patentinhaber: ZF Friedrichshafen AG, 88038 Friedrichshafen (DE)
(72) Erfinder: GRASSI, Davide, 38062 Arco (Trento) (IT); STASOLLA, Paolo, I-70125 Bari (IT); PELLEGRINETTI, Andrea, 37018 Malcesine VR (IT); ZANFEI, Adriano, I-38057 Madrano (TN) (IT); ZOTTELE, Michele, I-38100 Trento (IT)
(86) Internationale Anmeldenummer: PCT/EP2010/051577
(87) Internationale Veröffentlichungsnummer: WO 2010/115647

(56) Entgegenhaltungen:
- EP-A2- 0 035 859
- DE-A1- 2 637 345
- GB-A- 1 473 063
- US-A- 4 611 549

## Beschreibung

Die Erfindung betrifft ein Verfahren zum Betreiben eines Hybridantriebssystems eines Shiffs insbesondere eines Segelschiffs.

Die EP 1 914 161 A2 wird als nächstliegender Stand der Technik gegenüber dem Gegenstand des Anspruchs 1 angesehen.

Wenn die Windverhältnisse nicht mehr ausreichen um ein Segelschiff anzutreiben oder für den Fall des Manövrierens bei An- und Ablegemanövern benötigen auch Segelschiffe einen zusätzlichen Antrieb. Bekannt sind Segelschiffantriebe, bei welchen eine Verbrennungskraftmaschine einen Propeller antreibt. Die Verbrennungskraftmaschine ist in der Regel als Dieselmotor ausgeführt. Die Steuerung des Segelschiffs im Motorbetrieb erfolgt mittel eines Ruderblatts, das auch zum Steuern im Segelbetrieb dient.

Der Katalog "Integrated Starter Motor Generators" der Firma Iskra Avtoelektrika, welche Inhaberin der SI 22377 A ist, zeigt ein Schiffsantriebssystem, welches einen Parallel-Hybridantrieb wie unter SI 22377 A aufweist und einen Heckantrieb umfasst. In dem Heckantrieb findet mittels zwei Winkettrieben eine Z-förmige zweifache Umlenkung des Antriebsstrangs zum Propeller statt. Die erste Kupplung ist als Lamellen- oder Klauenkupplung ausgebildet. Mittels dieses Parallel-Hybridantriebs sind folgende Betriebsarten einstellbar: in einer Starter-Betriebsart ist die erste Kupplung geschlossen und die zweite Kupplung geöffnet. Die elektrische Maschine wirkt hierbei als Anlasser und setzt die Verbrennungskraftmaschine in Gang. Sobald die Verbrennungskraftmaschine läuft, wechselt das Antriebssystem mittels der elektronische Steuerungseinheit automatisch in die Generator-Betriebsart, in welcher ebenfalls die erste Kupplung geschlossen und die zweite Kopplung geöffnet ist. Die Verbrennungskraftmaschine treibt die als Generator wirksame elektrische Maschine an und lädt damit die Batterie auf. Optional kann während der Liegezeit des Schiffes im Hafen ein Aufladen der Batterie über die Umrichter-Ladeeinheit aus dem Stromnetz erfolgen. In der elektrischen Antriebsart ist die erste Kupplung geöffnet und die Verbrennungskraftmaschine steht. Die zweite Kupplung ist geschlossen, so dass die nun als Motor wirksame elektrischen Maschine den Propeller antreibt. In einer so genannten Booster-Betriebsart sind beide Kupplungen geschlossen und elektrische Maschine und Verbrennungskraftmaschine arbeiten parallel. Die summierte Antriebsleistung aus beiden Maschinen treibt den Propeller an.

Eine Umkehrung der Schubrichtung des Propellers, nachfolgend auch als Reversieren bezeichnet, die beispielsweise zur Umkehr der Fahrtrichtung bei An- oder Ablegemanövern erforderlich ist, wird bei dem gezeigten Heckantrieb mittels einer Umkehrung der Propellerdrehung erreicht. Hierzu ist zur Änderung der Drehrichtung des Propellers eine Doppelkonus-Kupplung vorgesehen, welche zwischen den beiden Drehrichtungen umschaltbar ist. Die Lösung mit einer Doppelkonus-Kupplung beinhaltet nachteiligerweise zusätzliche Bauteile und eine aufwändige Montage. Darüber hinaus ist der Umschaltvorgang mit einem schlechten Schaltverhalten in Form von Momentenstößen und der damit verbundenen Werkstoffbeanspruchung, einem ruckartigen Vortrieb sowie einem auffälligen Geräusch verbunden. Ein weiterer Nachteil bei einer Umkehrung der Schubrichtung durch eine Umkehrung der Drehrichtung des Propellers ist der verschlechterte Wirkungsgrad bei der Umsetzung von mechanischer in Strömungsenergie, da die Propellerblattgeometrie üblicherweise nur für eine Drehrichtung ausgelegt bzw. optimiert wird.

Die der Erfindung zugrunde liegende Aufgabe ist es, ein Verfahren zum reversierbaren Antrieb eines Schiffs, insbesondere eines Segelschiffs, bei gutem Wirkungsgrad anzugeben, sowie eine Antriebsvorrichtung mit einfachem Aufbau hierfür zu schaffen.

Diese Aufgabe wird durch die Merkmale der unabhängigen Ansprüche 1 und 8 gelöst.

Ein Schiffsantrieb, insbesondere ein Segelschiffsantrieb, umfasst eine Verbrennungskraftmaschine, mindestens einer Schaltkupplung sowie eine Antriebsvorrichtung zur Übertragung der Antriebsleistung an mindestens einen Propeller. Demnach wird in einem erfindungsgemäßen Verfahren mittels der Antriebsvorrichtung, welche als ein um eine im wesentlichen senkrechte Steuerachse schwenkbarer Schiffsantrieb ausgebildet ist, die Schubrichtung des Propellers durch Schwenken einer der Antriebsvorrichtung zugehörigen Schubeinheit verändert. Diese Bauweise einer Antriebsvorrichtung wird auch als Ruderpropeller bezeichnet.

Zur Umkehrung der Schubrichtung des Propellers wird hierbei die schwenkbare Schubeinheit um etwa 180° in die entgegen gesetzte Richtung geschwenkt. Hierdurch ist es möglich, die Schubrichtung des Propellers umzukehren ohne die Drehrichtung des Propellers zu ändern. Insbesondere beim Manövrieren ist eine derart mögliche Schubumkehr von Vorteil. Im Gegensatz zum Stand der Technik wird zur Umkehr der Schubrichtung keine zusätzliche Doppel- oder Wendekupplung, welche die genannten Nachteile bezüglich Geräusch, Schaltverhalten, Bauaufwand und Kosten aufweist, in der Antriebsvorrichtung benötigt. Darüber hinaus bietet der schwenkbare Schiffsantrieb die Möglichkeit, den Propellerschub in eine beliebige Richtung zu lenken, wodurch nicht nur eine Umkehr der Fahrtrichtung sondern beliebige Manöver zu ermöglicht werden. Insbesondere ist eine seitliche Schubkomponente, d.h. eine Schubrichtung welche nicht in der Längsrichtung des Schiffes liegt, ohne einen Querstrahlpropeller erzeugbar. Ein weiterer Vorteil einer Schubrichtungsumkehr ohne Änderung der Drehrichtung des Propellers liegt in einem guten Vortriebswirkungsgrad, bzw. einer effektiven Energieumsetzung von mechanischer Energie in Strömungsenergie am Propeller. Dies liegt darin begründet, dass die optimale Gestaltung der Propellerblattgeometrie nur für eine Drehrichtung ausgelegt ist. Bei einer entgegen gesetzten Drehrichtung des Propellers ist der Wirkungsgrad bei der Energieumsetzung schlechter als in der Drehrichtung für welche die Propellerblattgeometrie ausgelegt und optimiert wurde.

Vorteilhafte Ausgestaltungen der Erfindung ergeben sich aus den Unteransprüchen.

In einer vorteilhaften Ausgestaltung des erfindungsgemäßen Verfahrens wird in einer elektronischen Steuerungseinheit eine aktuelle erste Stellung der Schubeinheit erfasst. Bei einer in die elektronische Steuerungseinheit eingegebenen Anforderung einer Schubrichtungsumkehr wird diese ausgehend von der aktuellen ersten Stellung der Schubeinheit um etwa 184° in eine entgegen gesetzte zweite Stellung geschwenkt. Hierdurch ist die Schubrichtung aus jeder beliebigen Stellung des schwenkbaren Schiffsantriebs heraus umkehrbar, wie beispielsweise bei einem Schub quer zur Längsachse des Schiffs, wie er unter anderem beim Anlegen benötigt wird.

Weiterhin ist es möglich, dass die Schubrichtung der Schubeinheit mittels einer Rudereinrichtung eingestellt wird und die Anforderung einer Schubrichtungsumkehr mittels eines Fahrthebels einer Steuerungseinrichtung eingegeben wird.

Alternativ hierzu kann die Steuerungseinrichtung auch als Joystick, Schieberegler, Stellrad, einer Stellfunktion auf einem Bildschirm oder einem Panel mit Touch-Screen ausgebildet sein. Eine weitere Möglichkeit wäre es, die Funktion der Steuerungseinrichtung in der Funktion einer weiteren Steuerungseinrichtung für andere Komponenten zu integrieren.

Eine bevorzugte Ausführung des Verfahrens sieht vor, dass sich bei einer ersten Stellung der Schubeinheit der Fahrthebel in einem ersten Stellbereich befindet und dass sich in einer zweiten, der ersten entgegen gesetzten Stellung der Schubeinheit der Fahrthebel in einem zweiten Stellbereich befindet. Zum Herbeiführen der Schubrichtungsumkehr wird nun der Fahrthebel ausgehend von der jeweiligen Stellung der Schubeinheit über eine Mittelstellung hinweg in den jeweils anderen Stellbereich bewegt.

In diesem Rahmen ist es möglich, dass die Drehzahl der Verbrennungskraftmaschine und damit die Drehzahl des Propellers mittels der Auslenkung des Fahrthebels innerhalb des jeweiligen Stellbereichs eingestellt wird. Hieraus ergibt sich der Vorteil, dass sowohl die Anforderung der Schubumkehr als auch die Einstellung der Propeller- bzw. Motordrehzahl in nur einer Steuerungseinrichtung vereinigt sind.

Eine besondere Ausführung des. Verfahrens sieht vor, dass in einer ersten Stellung der Schubeinheit der Propellerschub zur Vorwärtsfahrt des Schiffes in Richtung des Hecks gerichtet ist und in einer zweiten, der ersten entgegen gerichteten Stellung der Schubeinheit der Propellerschub zur Rückwärtsfahrt in Richtung des Bugs gerichtet ist. Somit ist ein Reversieren von Vorwärts nach Rückwärts und umgekehrt ohne eine Änderung der Drehrichtung des Propellers und den damit verbundenen Nachteilen möglich.

In einer besonders vorteilhaften Variante wird während des Schwenkens der Schubeinheit von der ersten in die zweite Stellung der Propeller nicht angetrieben. Hierdurch wird eine unerwünschte Querkraftkomponente vermieden, welche beim Manövrieren eines Schiffs eine sicherheitskritische Verschlechterung des Manövrierverhaltens verursachen würde.

In diesem Rahmen ist es möglich, dass ausgehend von der ersten Stellung der Schubeinheit beim Bewegen des Fahrthebels von einem ersten zu einem zweiten Stellbereich beim Erreichen der Mittelstellung die Schaltkupplung zur Unterbrechung des Propellerantriebs selbsttätig geöffnet wird. Bei einem anschließenden Überfahren der Mittelstellung in den zweiten Stellbereich wird die Schubeinheit in eine der ersten Stellung entgegen gesetzte zweite Stellung um etwa 180° verschwenkt. Hierbei wird die Schaltkupplung erst wieder geschlossen nachdem die Schubeinheit die zweite Stellung eingenommen hat.

Drüber hinaus ist vorgesehen, dass nach dem Schließen der Schaltkupplung die Drehzahl der Verbrennungskraftmaschine entsprechend der Auslenkung der Steuerungseinrichtung wieder gesteigert wird.

Außerdem ist es möglich, dass ausgehend von einer ersten Stellung der Schubeinheit beim Bewegen des Fahrthebels zu dem entgegen gesetzten Stellbereich die Drehzahl der Verbrennungskraftmaschine reduziert wird und in einer Mittelstellung des Fahrhebels einen minimalen Wert annimmt, während die Schaltkupplung geöffnet ist. Bei einer weiteren Bewegung des Fahrthebels in den entgegen gesetzten Stellbereich wird die Schubeinheit zuerst in die entgegen gesetzte zweite Stellung geschwenkt. Anschließend wird nach dem Schließen der Schaltkupplung je nach Auslenkung der Steuerungseinrichtung im jeweiligen Stellbereich die Drehzahl der Verbrennungskraftmaschine erhöht.

Alternativ hierzu ist es möglich das Öffnen und Schließen der Schaltkupplung mittels einer zusätzlichen Bedieneinrichtung zu unterdrücken, wodurch der Umsteuervorgang schneller vor sich geht, was jedoch mit einem Nachteil an Manövriergenauigkeit aufgrund des drehenden Propellerschubs verbunden ist.

Es ist möglich, dass die Antriebsvorrichtung zur Ausführung des erfindungsgemäßen Verfahrens als schwenkbarer Schiffsantrieb, welcher auch als Ruderpropeller bezeichnet wird, ausgebildet ist. Dieser umfasst eine fest innerhalb eines Rumpfes angeordnete Getriebeeinheit und eine unterhalb des Rumpfes angeordnete, um eine im wesentlichen senkrechte Steuerachse schwenkbare Schubeinheit. Hierbei-sind zur Übertragung der Leistung von der Verbrennungskraftmaschine an den Propeller Z-förmig angeordnete Wellen innerhalb der Antriebsvorrichtung drehbar und miteinander gekoppelt angeordnet. Der schwenkbare Schiffsantrieb ermöglich vorteilhafterweise eine Ausrichtung des von dem Propeller erzeugten Schubs zum Steuern des Schiffes.

In einer vorteilhaften Ausgestaltung der Antriebsvorrichtung ist vorgesehen, dass die Schubeinheit mit der an dieser angeordneten Propellerwelle und damit die Schubrichtung des Propellers um die im wesentlichen senkrechte Steuerachse um mindestens 360° schwenkbar ist. Nur bei einem Schwenkwinkel von mindestens 360° ist können vorteilhafterweise alle zum Manövrieren des Segelschiffs erforderlichen Schubrichtungen eingestellt werden. Außerdem ist eine Umkehrung der Schubrichtung der Antriebseinheit in die entgegen gesetzte Richtung aus allen Stellungen der Schubeinheit heraus möglich.

Ausführungsbeispiele der Erfindung sind in den Zeichnungen dargestellt und werden im Folgenden näher beschrieben.

Es zeigen:
- Fig. 1: eine schematische Darstellung eines erfindungsgemäßen Hybridsystems eines Schiffs,
- Fig. 2: eine schematische Darstellung eines Segelschiffs mit dem erfindungsgemäßen Schiffsantrieb,
- Fig. 3: eine schematische Darstellung des Antriebsstranges des erfindungsgemäßen Schiffsantriebs,
- Fig. 4: eine schematische Darstellung einer Steuervorrichtung des erfindungsgemäßen Schiffsantriebs,
- Fig. 5: eine Schnittdarstellung einer erfindungsgemäßen Antriebsvorrichtung,
- Fig. 6: eine perspektivische Darstellung der Antriebsvorrichtung und der elektrischen Maschine,
- Fig. 7: eine schematische Darstellung eines Segelschiffs mit dem erfindungsgemäßen Schiffsantrieb im Segelbetrieb,
- Fig. 8: eine schematische Darstellung eines Schiffes mit einem schwenkbaren Schiffsantrieb und der Steuerungseinrichtung bei einer Vorwärtsfahrt,
- Fig. 9: eine schematische Darstellung eines Schiffes mit einem schwenkbaren Schiffsantrieb und der Steuerungseinrichtung bei einer Rückwärtsfahrt und
- Fig.10: eine Schnittzeichnung einer Ausgestaltung eines erfindungsgemäßen Schiffsantriebs.

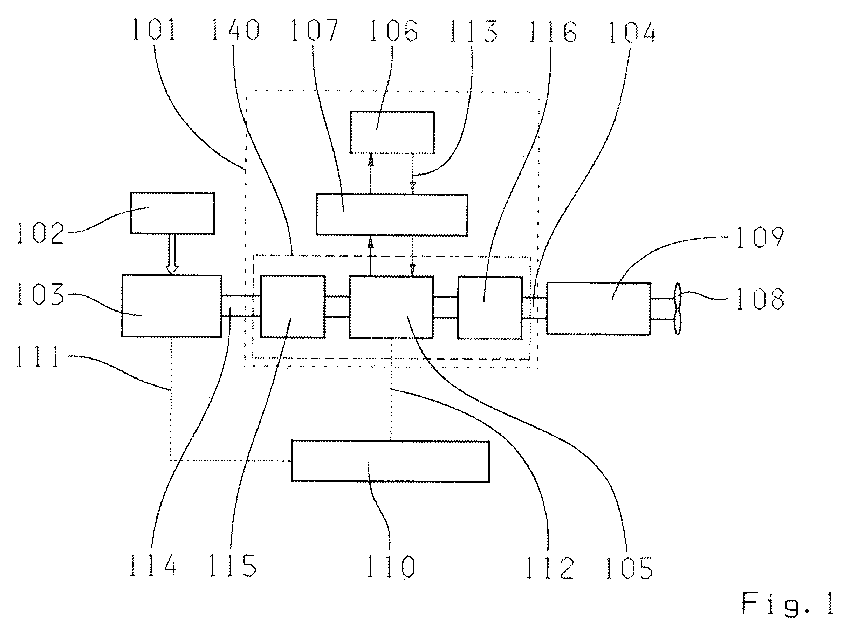

Fig. 1 zeigt eine schematische Darstellung eines erfindungsgemäßen Hybridantriebssystems eines Schiffs. Definitionsgemäß sind in einem Hybridantriebssystem mindestens zwei Energieumwandler mit jeweils einem Energiespeichersystem vorhanden. Das erfindungsgemäße Hybridantriebssystem umfasst eine Verbrennungskraftmaschine 103 mit einem Kraftstofftank 102 als Energiespeicher und eine elektrische Maschine 105 mit einer Batterie 106 als Energiespeicher. Das Hybridantriebssystem ist als so genannter Parallel-Hybrid ausgestaltet, d. h. die Verbrennungskraftmaschine 103 und elektrische Maschine 105 können beide wahlweise direkt den Abtrieb, in diesem Falle einen Propeller 108 antreiben.

Die elektrische Maschine 105 bildet zusammen mit einer Schaltkupplung 115 und einer Schaltkupplung 116 eine Antriebseinheit 140. Die Antriebseinheit 140 bildet zusammen mit einer Leistungselektronik 107, der Batterie 106 und einer Antriebsvorrichtung 109 eine elektrische Hybrideinheit 101. Die Antriebsvorrichtung 109 treibt einen Propeller 108 an. Die Verbrennungskraftmaschine 103 und die elektrische Hybrideinheit 101 werden von einer elektronischen Steuerungseinheit 110 über die elektrischen Verbindungen 111 und 112 angesteuert, wobei die Steuerungseinheit 110 unterschiedliche Betriebsmodi des Hybridantriebssystems bestimmt.

Zwischen der elektrischen Maschine 105 und einer Ausgangswelle 114 der Verbrennungskraftmaschine 103 ist die Schaltkupplung 115 und zwischen der elektrischen Maschine 105 und einer Eingangswelle 104 der Antriebsvorrichtung 109 die Schaltkupplung 116 angeordnet. Mittels der Schaltkupplungen 115 und 116 können die elektrische Maschine 105, die Verbrennungskraftmaschine 103 und die Antriebsvorrichtung 109 drehfest miteinander verbunden werden.

Die elektrische Maschine 105 kann je nach Ansteuerung abhängig vom jeweiligen Betriebsmodus als Generator oder als Motor betrieben werden. Im Generatorbetrieb wird durch eine Leistungselektronik 107 die Batterie 106 geladen. Bei einer Umkehr der Laderichtung 113 wird die elektrische Maschine 105 mittels der in der Batterie 106 gespeicherten elektrischen Energie als Motor betrieben.

In einem Fahrbereich mit mittlerer bis hoher Geschwindigkeit des Schiffs sind beide Schaltkupplungen 115 und 116 geschlossen und die Verbrennungskraftmaschine 103 kann den Propeller 108 antreiben. Die elektrische Maschine 105 kann in dieser Stellung der Schaltkupplungen 115 und 116 als Generator betrieben werden, so dass die Verbrennungskraftmaschine 103 sowohl den Propeller 108 als auch die elektrische Maschine 105 antreibt und damit die Batterie 106 auflädt. Ebenso ist, bei ausreichend geladener Batterie 106, ein Motorbetrieb der elektrischen Maschine 105 denkbar, wobei sich die Antriebsleistungen der Verbrennungskraftmaschine 103 und der elektrischen Maschine 106 addieren und so kurzzeitige Spitzenanforderungen an Antriebsleistung abdecken können, was auch als "Booster-Betrieb" bezeichnet wird. In der gleichen Konstellation kann auch durch die zusätzliche Leistung der elektrischen Maschine 105 die Verbrennungskraftmaschine 103 entlastet werden. Da bei mittlerer bis hoher Geschwindigkeit des Schiffs die Verbrennungskraftmaschine 103 bei relativ hohen Lasten betrieben wird, liegt der Betriebspunkt der Verbrennungskraftmaschine 103 in dem oder nahe dem Verbrauchsminimalbereich. Über die elektronische Steuerungseinheit 110 bzw. die Leistungselektronik 107 kann die elektrische Maschine 105 auch ausgeschaltet und dann leer von der Verbrennungskraftmaschine 103 mitgedreht werden.

Ist die Schaltkupplung 115 geschlossen und die Schaltkupplung 116 geöffnet kann die Verbrennungskraftmaschine 103 die elektrische Maschine 105 antreiben und mit dieser als Generator die Batterie aufladen. Diese Betriebsart kann bei Stillstand des Schiffs oder bei Segelfahrt gewählt sein. Bei der gleichen Stellung der Schaltkupplungen 115 und 116 kann mit der als Starter wirksamen elektrischen Maschine 105 im Motorbetrieb die Verbrennungskraftmaschine 103 angeworfen werden.

Ein elektrischer Antrieb des Schiffs kann bei geöffneter Schaltkupplung 115 und geschlossener Schaltkupplung 116 erfolgen. Die elektrische Maschine 105 wird bei der entsprechenden Ansteuerung durch die elektronische Steuerungseinheit 110 bzw. die Leistungselektronik 107 von der in der Batterie 106 gespeicherten elektrischen Energie angetrieben und die Verbrennungskraftmaschine 103 ist hierbei abgestellt. Insbesondere bei geringen Schiffsgeschwindigkeiten ist ein elektrischer Antrieb von Vorteil, da hier der Betriebspunkt der Verbrennungskraftmaschine 103 weit vom Verbrauchsminimalbereich entfernt liegt. Zudem ist so ein geräuscharmer und abgasfreier Betrieb des Schiffsantriebs in Umgebungen möglich, wo Geräuschbestimmungen herrschen oder wo Umweltbestimmungen dies gebieten.

Ein weiterer Vorteil des elektrischen Antriebs ist die Möglichkeit der Umkehrung der Drehrichtung der elektrischen Maschine 105 zur Reversierung der Fahrtrichtung des Schiffs. Dies ist beispielsweise beim Manövrieren von großem Vorteil. Zum einen kann in der Antriebsvorrichtung 109 im Unterschied zum Stand der Technik auf eine Reversierkupplung verzichtet werden. Außerdem erlaubt der elektrische Antrieb ein feinfühliges Manövrieren, da die Drehzahl der elektrischen Maschine 105 und damit die Propellerdrehzahl bis zum Stillstand verändert werden kann.

Darüber hinaus ist es in der beschrieben Schaltstellung der beiden Schaltkupplungen 115 und 116 ein weiterer Betriebsmodus möglich. Bei einer Segelfahrt wirkt der Propeller 108 aufgrund der Bewegung des Schiffs im Wasser als Turbine und treibt über die Antriebsvorrichtung 109 und die geschlossene Schaltkupplung 116 die elektrische Maschine 105 an, wodurch diese als Generator betrieben wird und die Batterie 106 auflädt. Diese Option ist besonders vorteilhaft, da die elektrische Energie letzten Endes von Windkraft ohne Verbrauch von Brennstoffen und den damit verbundenen Umweltbeeinflussungen erzeugt wird.

Da der Antrieb der elektrischen Maschine 105 mittels des Propellers 108 eine Widerstandskraft erzeugt, verliert das Segelschiff in diesem Betriebsmodus an Geschwindigkeit. Deshalb findet die Aufladung der Batterie 106 durch Windenergie erst ab einer definierten Mindestgeschwindigkeit statt, darunter kann der Propeller 108 durch Trennen der Schaltkupplung 116 leer mitlaufen.

Ist die Batterie 106 im Segelbetrieb vollständig geladen und die Schaltkupplung 116 wird geöffnet, um den Propeller 108 leer mitlaufen zu lassen, entsteht bei dem leeren Durchdrehen der Antriebsvorrichtung 109 ein nachteiliges Laufgeräusch. Um dies zu vermeiden, kann die elektrische Maschine 105 so angesteuert werden, dass diese ein Moment aufbaut. Durch eine entsprechende Regelung der als Motor betriebenen elektrischen Maschine 105 wird erreicht, dass der Propeller 108 still steht.

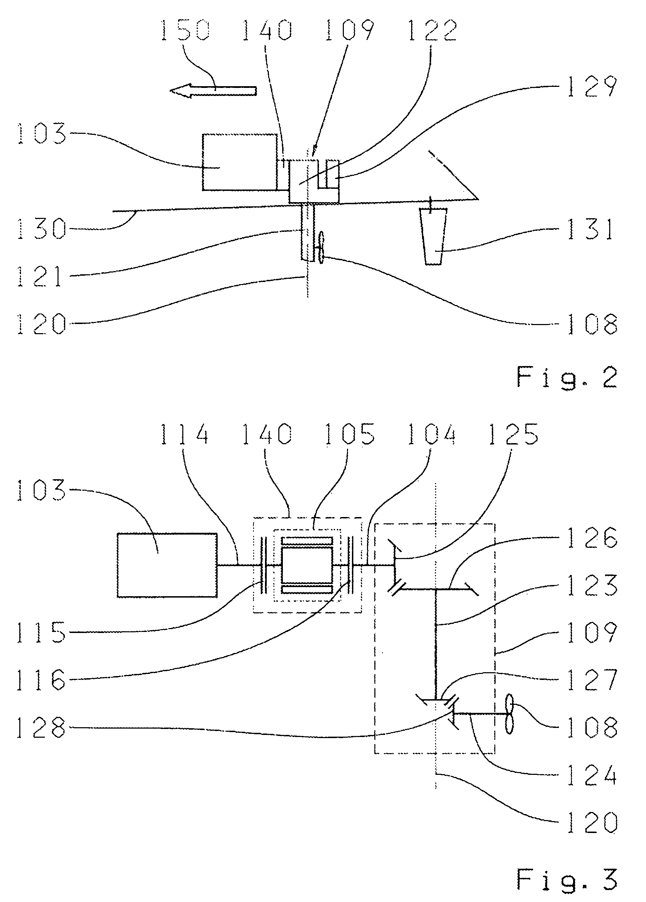

Fig. 2 zeigt eine schematische Darstellung eines Heckabschnitts eines Segelschiffs mit dem erfindungsgemäßen Schiffsantrieb. Ein Pfeil 150 zeigt die Vorwärts-Fahrtrichtung an. In einem Schiffsrumpf 130 ist eine Verbrennungskraftmaschine 103 angeordnet, an welcher eine als Hybridmodul ausgebildete Antriebseinheit 140 angeordnet ist. Die im Kraftfluss danach folgende Antriebsvorrichtung 109 treibt den Propeller 108 an. Die Antriebsvorrichtung 109 umfasst eine Getriebeeinheit 122, welche innerhalb des Schiffsrumpfes 130 fest angeordnet ist, eine Schubeinheit 121 und ein Steuerantrieb 129. Die Schubeinheit 121 ist unterhalb bzw. außerhalb des Schiffsrumpfes 130 an der Getriebeeinheit 122 um eine vertikale Steuerachse 120 schwenkbar angeordnet, wobei die Schubeinheit 121 mittels des Steuerantriebs 129 bewegt wird. Am heckseitigen Ende des Schiffsrumpfes 130 ist ein Ruder 131 zum Steuern des Segelschiffs im Segelbetrieb schwenkbar angeordnet. Wird das Segelschiff im Motorbetrieb von dem Hybridantrieb bzw. dem Propeller 108 angetrieben, so erfolgt die Steuerung des Segelschiffs mittels der Verschwenkung der Schubeinheit 121. Hierdurch ist vorteilhafterweise jede Richtung denkbar, was gerade beim Manövrieren sehr vorteilhaft ist. Zum Reversieren der Fahrtrichtung ist im Normalfall die Verbrennungskraftmaschine 103 abgestellt und die Drehrichtung der elektrischen Maschine 105 wird umgekehrt, so dass auch der Propeller 108 in die Gegenrichtung dreht. Hierdurch ist ein feinfühliges Reversieren möglich, zumal sich die elektrische Maschine 105 aus dem Stillstand heraus anfahren lässt. Bei einem Antrieb des Propellers 108 mittels der Verbrennungskraftmaschine 103 kann dessen Drehung nur in eine Richtung erfolgen. Muss bei einem Ausfall der elektrischen Maschine 105 das Manövrieren des Segelschiffs ausschließlich mittels der Verbrennungskraftmaschine 103 erfolgen, so wird die Schubeinheit 121 in die Gegenrichtung geschwenkt.

Fig. 3 zeigt eine schematische Darstellung des Antriebsstranges des erfindungsgemäßen Schiffsantriebs. Wie bereits unter Fig. 1 dargestellt ist die Verbrennungskraftmaschine 103 mittels einer Ausgangswelle 114 mit der Antriebseinheit 140 verbunden. Die Drehbewegung des Hybridantriebs wird durch die Eingangswelle 104 in die Antriebsvorrichtung 109 eingeleitet. Die Antriebsvorrichtung 109 umfasst die Z-förmig angeordneten Wellen 104, 123 und 124 und zwei die Wellen miteinander koppelnden Winkeltriebe, welche aus einem Kegelrad 125 und 126 und aus einem Kegelrad 127 und 128 gebildet werden. Innerhalb der Antriebsvorrichtung 109 ist das Kegelrad 125 auf der Eingangswelle 109 drehfest angeordnet. Das Kegelrad 125 ist im Eingriff mit dem Kegelrad 126, welches drehfest auf einer Welle 123 an deren oberen Ende angeordnet ist. Die Drehachse der Welle 123 ist die im Wesentlichen senkrecht stehende Steuerachse 120. Am unteren Ende der Welle 123 ist das Kegelrad 127 drehfest auf dieser angeordnet. Das Kegelrad 127 steht mit dem Kegelrad 128 im Eingriff, wo bei das Kegelrad 128 drehfest auf einem Ende der Welle 124 innerhalb der Antriebsvorrichtung 109 angeordnet ist. Am anderen Ende der Welle 124, außerhalb der Antriebsvorrichtung 109 ist der Propeller 108 drehfest mit der Welle 124 verbunden. Da die Reversierung der Fahrtrichtung im Normalfalle mittels der elektrischen Maschine 105 erfolgt, ist keine Reversierkupplung in der Antriebsvorrichtung 109 erforderlich. Soll bei einem Ausfall der elektrischen Maschine 105 die Fahrtrichtung umgekehrt werden, beispielsweise zwecks An- oder Ablegemanövern, so kann dies durch Schwenken der in Fig. 2 gezeigten Schubeinheit 121 erfolgen.

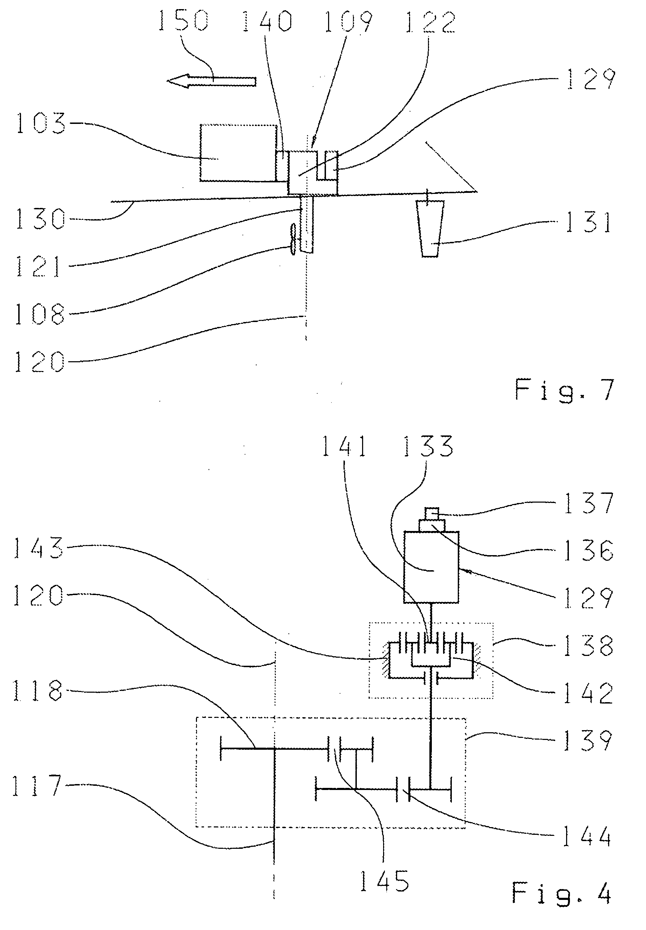

Fig. 4 zeigt eine schematische Darstellung einer Steuervorrichtung des erfindungsgemäßen Schiffsantriebs. Die Steuervorrichtung umfasst einen Steuerantrieb 129, ein Planetengetriebe 138, ein Vorgelegegetriebe 139 und eine Steuerwelle 117. Die Steuerwelle 117 ist mit der nicht gezeigten Schubeinheit 121 drehfest verbunden. Auf einer Außenkontur der Steuerwelle 117 ist ein außenverzahntes Zahnrad 118 drehfest mit dieser verbunden. Der Steuerantrieb 129 umfasst einen Elektromotor 133, eine Bremse 136 und eine Notbetätigung 137. Um einen gewünschten Kurs des Segelschiffs einzustellen muss die Schubeinheit 121 um einen bestimmten Winkel um die Steuerachse 120 geschwenkt werden. Ein Steuersignal schaltet hierzu den Elektromotor 133 des Steuerantriebs 129 ein. Da ein Elektromotor gemeinhin relativ schnell dreht, aber die Schwenkbewegung der Schubeinheit 121 jedoch sehr winkelgenau erfolgen muss, wird die Drehzahl des Elektromotors 133 mittels des Planetengetriebes 138 und des Vorgelegegetriebes 139 auf die erforderliche Winkelgeschwindigkeit der Steuerwelle 117 reduziert. Hierzu treibt der Elektromotor 133 ein Sonnenrad 141 des Planetengetriebes 138 an. Ein Hohlrad 143 steht, so dass der Abtrieb aus dem Planetengetriebe 138 durch den Planetenträger 142 erfolgte. Die derart reduzierte Drehzahl wird nun im Vorgelegegetriebe 139 durch eine Stirnradstufe 144 und eine Stirnradstufe 145 nochmals reduziert. Der Ausgang des Vorgelegegetriebes 139 erfolgt durch das Zahnrad 118 direkt auf die Steuerwelle 117, mit welcher das Zahnrad 118 drehfest verbunden ist. Ist die gewünschte Stellung der Schubeinheit 121 erreicht wird der Elektromotor 133 abgeschaltet und die Schubeinheit 121 mittels der Bremse 136 gegen ungewünschtes selbsttätiges Verdrehen gesichert. Fällt der Elektromotor 133 aus, kann der Steuerantrieb 129 mittels der Notbetätigung 137 mechanisch betätigt werden, womit eine behelfsmäßige Einstellung eines Kurses möglich ist.

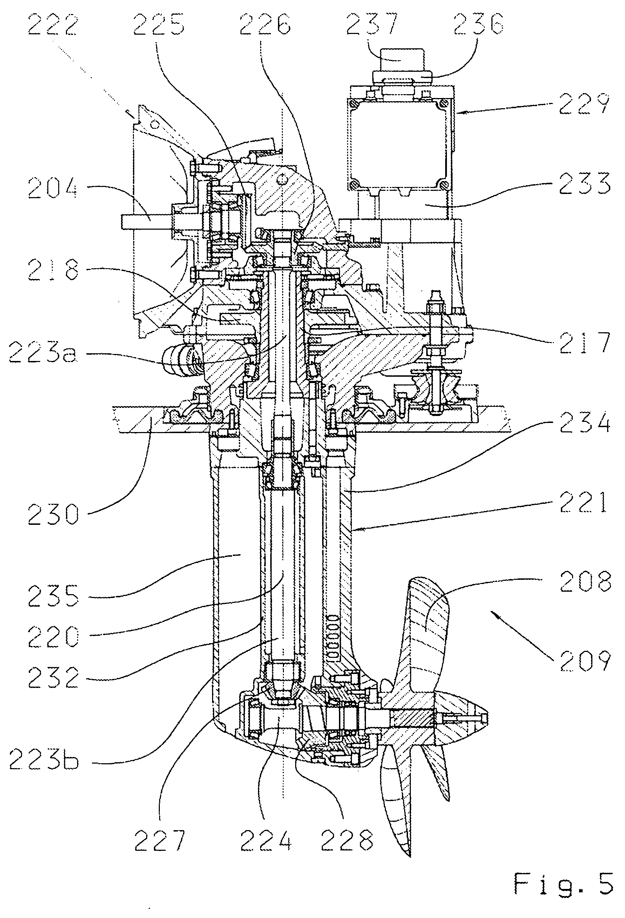

Fig. 5 zeigt eine Schnittdarstellung einer erfindungsgemäßen Antriebsvorrichtung 209. Die Antriebsvorrichtung 209 umfasst eine Getriebeeinheit 222 und eine Schubeinheit 221. Die Getriebeeinheit 222 ist hierbei oberhalb, bzw. innerhalb eines Rumpfs 230 fest angeordnet. Die Schubeinheit 221 ist in der Getriebeeinheit 222 schwenkbar um eine Steuerachse 220 gelagert. Die Getriebeeinheit 222 umfasst einen Steuerantrieb 229, welcher einen Elektromotor 233, eine Bremse 236 und eine Notbetätigung 237 aufweist. Die Wirkungsweise der Bremse 236 und der Notbetätigung 237 wurden unter Fig. 4 beschrieben. Ein Kegelrad 225 an einer Eingangswelle 204 steht mit einem Kegelrad 226 an einer Welle 223a im Eingriff und treibt diese sowie eine sich in der Schubeinheit 221 anschließende Welle 223b an. Die Wellen 223a und 223b sind formschlüssig miteinander verbunden und drehen sich beide um die Steuerachse 220. Die Welle 223b ist in der Schubeinheit 221 mittels eines Kegelrads 227 und eines Kegelrads 228 mit einer Welle 224 verbunden, wobei ein Propeller 208 an einem Ende der Welle 224 außerhalb eines Gehäuses 234 drehfest mit dieser verbunden ist. Die Welle 223b ist in einem Wellenkanal 232 drehbar angeordnet. Innerhalb des Wellenkanals 232 ist ein Schmierstoff bevorratet, der zur Schmierung der Lager und Verzahnungen 225, 226, 227 und 228 dient. Zwischen dem Wellenkanal 232 und dem Gehäuse 234 ist ein Kühlkanal 235 ausgebildet, in welchen sich die Schubeinheit 221 umgebendes Wasser eindringt. Das Wasser dient als Kühlmedium für die leistungsführenden Teile der Antriebsvorrichtung 209. Der Antrieb der Schubeinheit 221 erfolgt mittels des Steuerantriebs 229, dessen Elektromotor 233 über ein nicht gezeigtes Planetengetriebe und ein ebenfalls nur teilweise dargestelltes Vorgelegegetriebe ein Zahnrad 218 und damit eine Steuerwelle 217 mit der damit verbundenen Schubeinheit 221 antreibt.

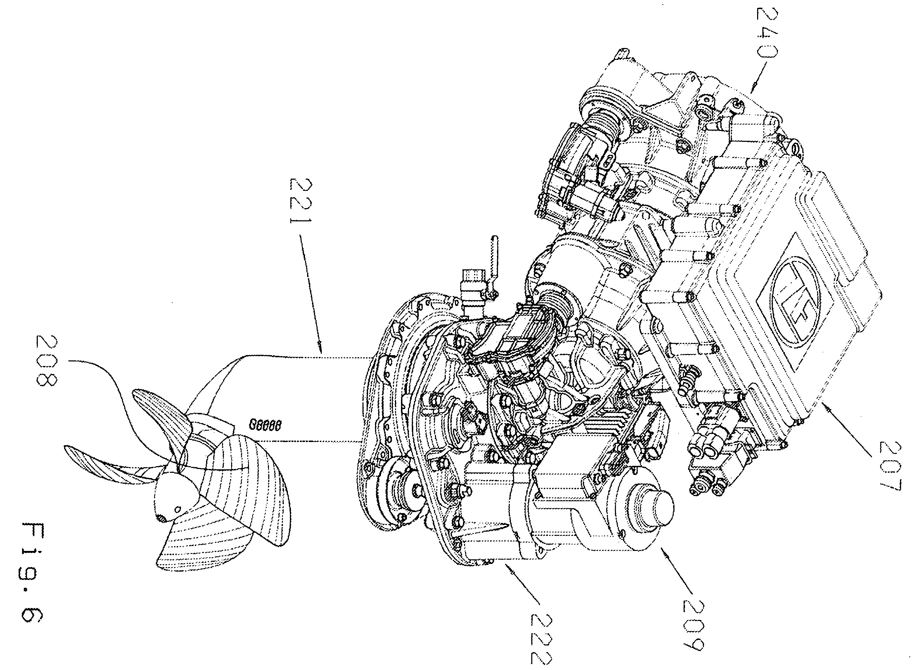

Fig. 6 zeigt eine perspektivische Ansicht der Antriebsvorrichtung 209, welche die Schubeinheit 221 mit dem Propeller 208 und die Getriebeeinheit 222 umfasst. Die Antriebsvorrichtung 209 ist in dieser Darstellung an eine Antriebseinheit 240 angebaut. Eine Leistungselektronik 207 ist direkt an der Antriebseinheit 240 angeordnet. Durch die direkte Verbindung aller Komponenten wird ein kompakter Hybridantrieb gebildet. Die Schubrichtung des Propellers 208 kann hierbei wie unter Fig. 2 bis 5 beschrieben verändert werden, was neben der positiven Wirkung eines guten Vortriebswirkungsgrads eine gute Manövrierbarkeit, insbesondere beim An- und Ablegen ermöglicht.

Fig. 7 zeigt die schematische Darstellung eines Heckabschnitts eines Segelschiffes mit der erfindungsgemäßen Antriebsvorrichtung 109. Ein Pfeil 150 zeigt die Vorwärts-Fahrtrichtung an. Die dargestellten Merkmale entsprechen denen in Fig. 2. Die Schubeinheit 121 ist im Vergleich zur Darstellung in Fig. 2 in die entgegengesetzte Längsrichtung geschwenkt. Diese Position der Schubeinheit 121 ermöglicht bzw. wirkt vorteilhaft auf zwei Betriebsarten. Die erste Betriebsart ist die Rückwärtsfahrt bei Antrieb durch die Verbrennungskraftmaschine 103, welche allerdings nur in Ausnahmefällen wie beispielsweise dem Ausfall der elektrischen Maschine 105 erforderlich ist. Da die Verbrennungskraftmaschine 103 ihre Drehrichtung und damit die des Propellers 108 nicht ändern kann, wird der Schub des Propellers 108 durch die Verschwenkung der Schubeinheit 121 in die entgegengesetzte Richtung gelenkt, so dass ein Reversieren der Fahrtrichtung möglich ist.

Eine weitere Betriebsart, in welcher die Schubeinheit ca. 180° aus der Antriebsrichtung bzw. in die entgegengesetzte Richtung wie bei Geradeausfahrt geschwenkt wird, ist das Aufladen der Batterie im Segelbetrieb. Hierbei wirkt der Propeller 108 als Turbine, weiche vom durchfahrenen Wasser angetrieben wird und so die elektrische Maschine 105 antreibt. Die wird bei dieser Betriebsart als Generator betrieben und die erzeugte elektrische Energie wird entweder in der Batterie gespeichert, wo sie für einen geräuscharmen und abgasfreien Betrieb der elektrischen Maschine 105 oder zum Betreiben von Bordgeräten zur Verfügung steht. Um alle notwendigen Schubrichtungen einstellen zu können, ist eine Schwenkbarkeit der Schubeinheit 121 um mindestens 360° erforderlich.

Eine weitere Steigerung der Manövrierbärkeit wird durch eine Kombination des erfindungsgemäßen Schiffsantriebs mit einem nicht dargestellten Querstrahlpropeller, der vorzugsweise im Bug des Schiffsrumpfes 130 angeordnet ist, erreicht.

Die Schaufeln eines Propellers weisen eine bestimmte Krümmungsgeometrie auf, weiche für eine festgelegte Drehrichtung zur optimalen Umsetzung von Antriebsenergie in Schubkraft ausgelegt wurde. Wird nun der Propeller in der gleichen Ausrichtung die er zum Antrieb einnahm vom durchfahrenen Wasser als Turbine betrieben, erfolgt die Umsetzung von Strömungsenergie in Antriebsenergie für die als Generator betriebene elektrische Maschine 105 nur mit geringer Effizienz, da die Strömung auf die für diesen Betrieb ungünstig gestaltete Seite der Propellerschaufeln auftritt. Wird der Propeller 108 durch Schwenken der Schubeinheit 109 in die entgegengesetzte Richtung ausgerichtet, so wirken die Strömungskräfte auf die für die Energieumsetzung günstiger gestaltete Schaufelseite und die erzeugbare elektrische Energie ist größer. Da ein Segelschiff im Segelbetrieb einer gewissen seitlichen Drift unterliegt, stimmt die Fahrtrichtung nicht immer mit der Längsrichtung des Segelschiffs überein. In diesem Falle würde der als Turbine betriebene Propeller 108 schräg angeströmt werden, was wiederum die Energieumsetzung verschlechtert. Zusätzlich wäre deshalb hier eine Kompensation der Drift möglich, indem die Drift und damit die wirkliche Fahrtrichtung des Segelschiffs gemessen bzw. errechnet wird und die Schubeinheit 109 um einen entsprechenden Schwenkwinkel in die reale Fahrtrichtung ausgerichtet wird. Die Messung der Drift kann beispielsweise mittels GPS-Daten oder radargestützter Daten erfolgen.

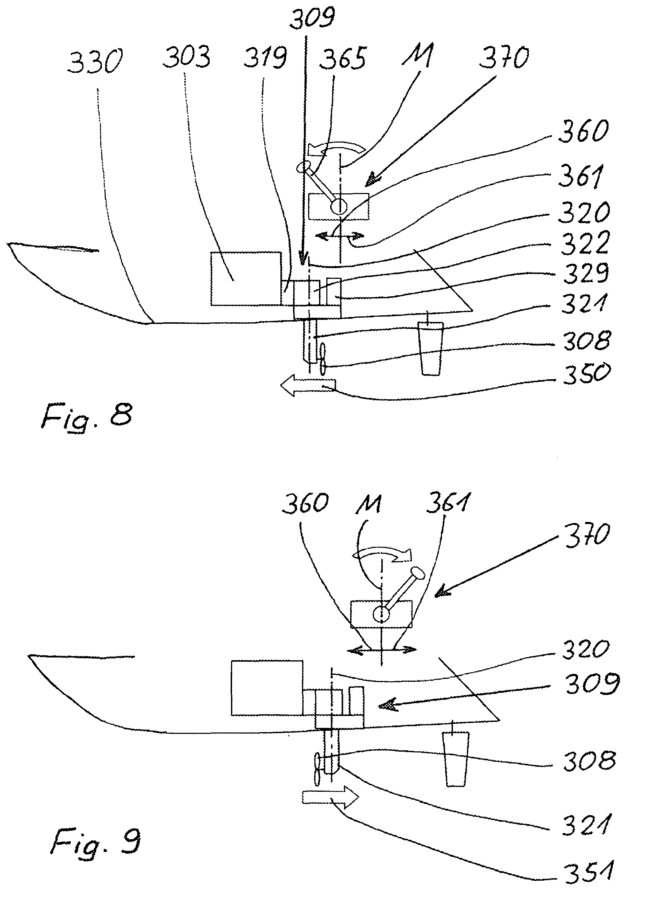

Fig. 8 zeigt eine schematische Darstellung eines nicht vollständig dargestellten Schiffes mit einer Verbrennungskraftmaschine 303, einem schwenkbaren Schiffsantrieb 309, auch als Ruderpropeller bezeichnet, und einer Steuerungseinrichtung 370 in Form eines Fahrthebels 365 bei einer Vorwärtsfahrt. Alternativ kann die Steuerungseinrichtung 370 auch als Joystick, Tastatur, Stellrad, Schieberegler oder ein Panel mit Touch-Screen ausgebildet sein.

Eine in einem Schiffsrumpf angeordnete Antriebsvorrichtung 309 umfasst hierbei eine Schaltkupplung 319, eine Getriebeeinheit 322, eine um eine im wesentlichen senkrechte Steuerachse 320 schwenkbare Schubeinheit 321 und einen Steuerantrieb 329, mittels welchem die Schubeinheit 321 verschwenkt wird. Die Schaltkupplung 319 ist im gezeigten Beispiel als reibschlüssige Kupplung ausgeführt. Prinzipiell kann zu diesem Zweck auch eine formschlüssige Kupplung verwendet werden. Die Verbrennungskraftmaschine 303 treibt hierbei über die Schaltkupplung 319, die Getriebeeinheit 322 und die Schubeinheit 321 mindestens einen Propeller 308 an. Die Drehrichtung der Verbrennungskraftmaschine 303 ist nicht veränderbar, wodurch auch die Drehrichtung des Propellers 308 festgelegt ist. Ein Propeller 308 ist in der Darstellung mittels der Schubeinheit 321 nach dem Heck hin ausgerichtet und erzeugt einen nach Achtern gerichteten Propellerschub, wodurch sich das Schiff in eine Vorwärts-Fahrtrichtung 350 bewegt. Die Steuerung dieser Bewegung erfolgt mittels eines Fahrthebels 365, welcher in einen Stellbereich 360 für die Vorwärtsfahrt bewegt wurde. Soll nun die Schubrichtung der Schubeinheit 321 umgekehrt werden, wird der Fahrthebel 365 in eine der Betätigungsrichtung 360 entgegen gesetzte Betätigungsrichtung in den Stellbereich 361 für Rückwärtsfahrt gestellt. Hierdurch wird die Schubeinheit 321 um etwa 180° in eine der Stellung für Vorwärtsfahrt gegenüberliegende Stellung geschwenkt, wodurch sich das Schiff in die Rückwärts-Fahrtrichtung 351 bewegt. Zur Vermeidung einer Querkraft auf den Schiffsrumpf 330 infolge der mit der Drehung der Schubeinheit 321 schwenkenden Schubkraft ist es möglich, den Schub des Propellers 308 abzuschalten, indem bei Beginn der Schwenkbewegung der Schubeinheit 321 die Schaltkupplung 319 geöffnet wird und erst nach dem Erreichen der gegenüberliegenden Stellung wieder geschlossen wird.

Hierbei wird bei der Bewegung des Fahrthebels 365 zu einer Mittelstellung M die Drehzahl der Verbrennungskraftmaschine 303 bzw. des Propellers 308 verringert. Das Signal zur Umkehrung der Schubrichtung erhält eine nicht gezeigte elektronische Steuerungseinheit wenn der Fahrthebel 365 aus einem ersten Stellbereich 360 heraus über die Mittelstellung M hinweg in einen zweiten Stellbereich 361 bewegt wird. Daraufhin wird zunächst die Schaltkupplung 319 geöffnet und danach mittels des Steuerantriebs 329 die Schubeinheit 321 um etwa 180° in die entgegen gesetzte Stellung geschwenkt. Nach dem Abschluss des Schwenkvorganges, in diesem Zusammenhang auch als Umsteuerung bezeichnet, wird die Schaltkupplung 319 wieder geschlossen. Bei einer weiteren Bewegung des Fahrthebels 365 in den zweiten Stellbereich hinein wird analog zur Vorwärts-Fahrtrichtung die Drehzahl der Verbrennungskraftmaschine 303, bzw. des Propellers 308 wieder gesteigert. Mittels der reibschlüssigen Schaltkupplung 319 kann bei entsprechender Ansteuerung ein Schaltverhalten frei von Drehmomentstößen erreicht werden.

Wird der Fahrthebel 365 nur in die Mittelstellung M bewegt, öffnet die Schaltkupplung 319. Ist in der elektronischen Steuerungseinheit abgespeichert aus welchem Stellbereich der Fahrthebel 365 in die Mittelstellung M gebracht wurde, erkennt bei einer weiteren Bewegung des Fahrthebels aus der Mittelstellung M heraus in den entgegen gesetzten Stellbereich die elektronische Steuerungseinheit die Anforderung einer Schubrichtungsumkehr, woraufhin die Schubeinheit 321 von dem Steuerantrieb um etwa 180° in eine der ersten Stellung entgegen gesetzte zweite Stellung geschwenkt wird.

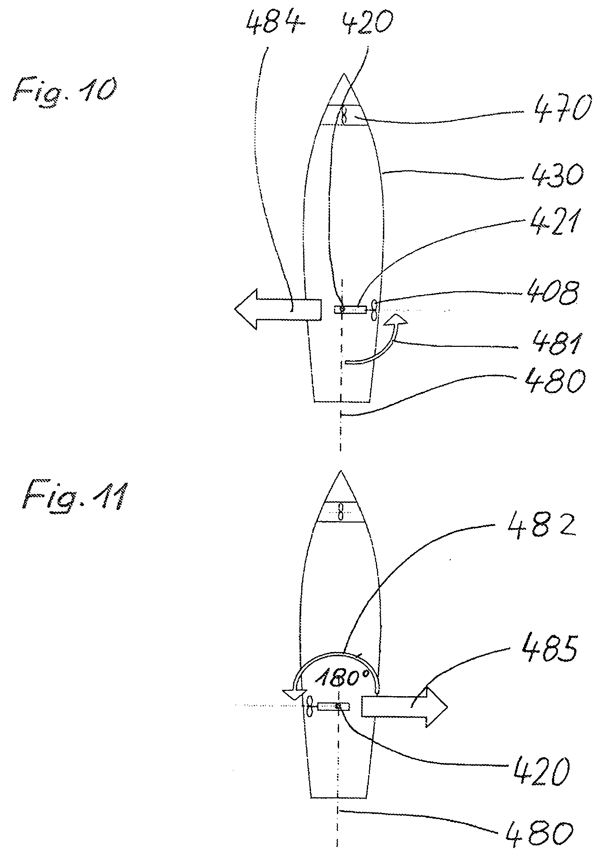

Eine alternative Umsteuerung der Vortriebsrichtung ohne Öffnen und Schließen der Schaltkupplung 319 wird durch ein Verfahren erreicht, bei welchem die Drehzahl der Verbrennungskraftmaschine 303, bzw. des Propellers 308 bei Betätigung des Fahrthebels zur Mittelstellung M hin abgesenkt wird und in der Mittelstellung eine bestimmte minimale Drehzahl erreicht, vorzugsweise die Leerlaufdrehzahl der Verbrennungskraftmaschine 303. Während des Umsteuervorgangs, wie man auch die Schwenkbewegung der Schubeinheit 321 um etwa 180° in die entgegen gesetzte Schubrichtung bezeichnet, bleibt der unerwünschte Schub quer zur Längsachse 480 (s. Fig. 10 und 11) auf ein Mindestmass begrenzt. Der Vorteil hiervon ist ein kürzerer Umsteuervorgang. Um die Anforderung einer Schubumkehr zu erkennen, kann der Umsteuervorgang erst dann ausgelöst werden, wenn der Fahrthebel 365 vom ersten Stellbereich 360 über die Mittelstellung M hinweg in den zweiten Stellbereich 361 bewegt wird. Wird der Fahrthebel 365 nur in die Mittelstellung bewegt, öffnet die Schaltkupplung. Durch zusätzliche, nicht dargestellte, Bedienelemente kann es möglich gemacht werden die Öffnung der Schaltkupplung 319 zu unterdrücken.

Fig. 10 und Fig. 11 zeigen anhand einer schematischen Draufsicht eines Schiffes die Umkehrung des Propellerschubs aus einer beliebigen Stellung einer Schubeinheit 421 heraus. Der Umsteuervorgang erfolgt analog zu dem Wechsel zwischen Vorwärts- und Rückwärtsfahrt wie unter Fig. 8 und 9 beschrieben. Auf der Unterseite eines Schiffsrumpfes 430 ist die Schubeinheit 421 eines schwenkbaren Schiffsantriebs, auch als Ruderpropeller bezeichnet, um eine im wesentlichen vertikale Steuerachse 420 schwenkbar. In Fig. 10 ist die Schubeinheit um einen Steuerwinkel 481 von 90° zur Längsrichtung 480 des Schiffes verdreht, so dass der Schub des Propellers 408 das Schiff in die Bewegungsrichtung 484 nach links schiebt. Eine Bewegungsrichtung nicht in Richtung der Längsrichtung ist beispielsweise bei Anlegen erforderlich. Soll nun ein Abbremsen dieser Bewegung oder eine Umkehr der Bewegungsrichtung 484 in die Bewegungsrichtung 485 erfolgen, so wird zur Umkehr der Schubrichtung des Propellers 408 die Schubeinheit 421 um einen Schwenkwinkel 482 von etwa 180° in die Gegenrichtung verdreht, wie in Fig. 11 dargestellt ist. An dem gezeigten Schiffsrurnpf 430 ist als mögliche zusätzliche Option im Bereich des Bugs ein Querstrahlpropeller 470 angeordnet, welcher ebenfalls eine Schubkomponente quer zur Längsrichtung des Schiffes erzeugen und somit die Manövriermöglichkeiten erweitern kann. Die Umkehr der Schubrichtung kann aus jedem beliebigen Schwenkwinkel 481 heraus erfolgen, falls eine freie Drehbarkeit der Schubeinheit 421 gegeben ist, bzw. die Schubeinheit um mindestens 360° schwenkbar ist. Ein Querstrahlpropeller im Bereich des Hecks zur Verbesserung der Manövrierbarkeit kann vorteilhafterweise aufgrund der frei wählbaren Schubrichtung eingespart werden.

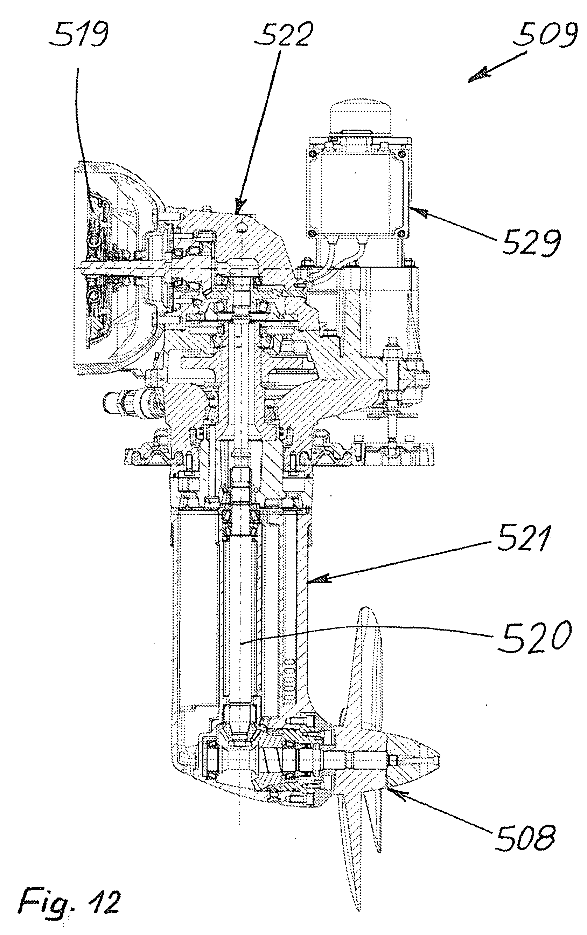

Fig. 12 zeigt anhand einer Schnittzeichung eine Ausgestaltung einer Antriebsvorrichtung 509, mit welcher das unter Fig. 8 bis 11 beschriebene Verfahren zur Umkehr der Schubrichtung möglich ist. Eine Schaltkupplung 519, zur Entkoppelung der antreibenden Verbrennungskraftmaschine vom Propeller 508 ist an einer Getriebeeinheit 522 angeordnet. Die Schaltkupplung 519 in diesem Beispiel ist als reibschlüssige Kupplung ausgebildet, wodurch ein komfortables und stoßfreies Ein- und Auskuppeln möglich ist. Zudem können für diesen Zweck Kupplungen aus dem Automotivebereich verwendet werden, was sich günstig auf die Kosten auswirkt. Alternativ hierzu wäre auch eine formschlüssige Schaltkupplung denkbar. Eine Schubeinheit 521 wird mittels eines Steuerantriebs 529 um eine im wesentlichen senkrechte Steuerachse 520 verschwenkt, wobei der Steuerantrieb 529 in dem dargestellten Beispiel als Elektromotor ausgebildet ist. Eine mögliche Alternative hierzu wäre eine hydraulische Betätigung mittels eines hydrostatischen Pumpe-Motor-Systems denkbar.

### Bezugszeichen

- 101: elektrische Hybrideinheit
- 102: Kraftstofftank
- 103: Verbrennungskraftmaschine
- 104: Eingangswelle Antriebsvorrichtung
- 105: elektrische Maschine (Motor/Generator)
- 106: Batterie
- 107: Leistungselektronik
- 108: Propeller
- 109: Antriebsvorrichtung
- 110: elektronische Steuerungseinheit
- 111: elektrische Verbindung
- 112: elektrische Verbindung
- 113: Laderichtung
- 114: Ausgangswelle Verbrennungskraftmaschine
- 115: Schaltkupplung
- 116: Schaltkupplung
- 117: Steuerwelle
- 118: Zahnrad
- 120: Steuerachse
- 121: Schubeinheit
- 122: Getriebeeinheit
- 123: Welle
- 124: Welle
- 125: Kegelrad
- 126: Kegelrad
- 127: Kegelrad
- 128: Kegelrad
- 129: Steuerantrieb
- 130: Schiffsrumpf
- 131: Ruder
- 133: Elektromotor
- 136: Bremsvorrichtung
- 137: Notbetätigung
- 138: Planetengetriebe
- 139: Vorgelegegetriebe
- 140: Antriebseinheit
- 141: Sonnenrad
- 142: Planetenträger
- 143: Hohlrad
- 144: Stirnradstufe
- 145: Stirnradstufe
- 150: Vorwärts-Fahrtrichtung
- 204: Eingangswelle Antriebsvorrichtung
- 205: elektrische Maschine (Motor/Generator)
- 207: Leistungselektronik
- 208: Propeller
- 209: Antriebsvorrichtung
- 217: Steuerwelle
- 218: Zahnrad
- 220: Steuerachse
- 221: Schubeinheit
- 222: Getriebeeinheit
- 223a: Welle
- 223b: Welle
- 224: Welle
- 225: Kegelrad
- 226: Kegelrad
- 227: Kegelrad
- 228: Kegelrad
- 229: Steuerantrieb
- 230: Schiffsrumpf
- 232: Wellenkanal
- 233: Elektromotor
- 234: Gehäuse
- 235: Kühlkanal
- 236: Bremsvorrichtung
- 237: Notbetätigung
- 240: Antriebseinheit
- 303: Verbrennungskraftmaschine
- 308: Propeller
- 309: Antriebsvorrichtung
- 319: Schaltkupplung
- 320: Steuerachse
- 321: Schubeinheit
- 322: Getriebeeinheit
- 329: Steuerantrieb
- 330: Schiffsrumpf
- 350: Vorwärts-Fahrtrichtung
- 351: Rückwärts-Fahrtrichtung
- 360: Stellbereich
- 361: Stellbereich
- 365: Fahrthebel
- 370: Steuerungseinrichtung
- 408: Propeller
- 420: Steuerachse
- 421: Schubeinheit
- 430: Schiffsrumpf
- 470: Querstrahlpropeller
- 480: Längsachse des Schiffs
- 481: Steuerwinkel
- 482: Schwenkwinkel
- 484: Bewegungsrichtung
- 485: Bewegungsrichtung
- 508: Propeller
- 509: Antriebsvorrichtung
- 519: Schaltkupplung
- 520: Steuerachse
- 521: Schubeinheit
- 522: Getriebeeinheit
- 529: Steuerantrieb

- M: Mittelstellung

## Patentansprüche

1. Verfahren zum Betreiben eines Hybridantriebssystems eines Schiffes, insbesondere eines Segelschiffes, umfassend eine Verbrennungskraftmaschine (103, 303), eine elektrische Maschine (105), wobei die elektrische Maschine (105) zusammen mit mindestens einer Schaltkupplung (115, 116) eine Antriebseinheit bildet, eine Antriebsvorrichtung (109, 209, 309, 509) zur Übertragung der Antriebsleistung an mindestens einen Propeller (108, 208, 308, 408, 508), wobei die Antriebsvorrichtung (109) zusammen mit der Antriebseinheit (140), einer Leistungselektronik (107) und einer Batterie (106) eine elektrische Hybrideinheit (101) bildet, eine elektrische Steuerungseinheit (110) zur Steuerung der Verbrennungskraftmaschine (103) und der elektrischen Hybrideinheit (101), wobei die Steuerungseinheit (110) unterschiedliche Betriebsmodi des Hybridantriebssystems bestimmt, wobei bei einer Umkehrung der Drehrichtung der elektrischen Maschine (105) die Fahrtrichtung des Schiffes reversiert wird, **dadurch gekennzeichnet, dass** mittels der Antriebsvorrichtung (109, 209, 309, 509), welche als ein um eine im wesentlichen senkrechte Steuerachse (120, 220, 320, 420, 520) schwenkbarer Schiffsantrieb ausgebildet ist, die Schubrichtung des Propellers (108, 208, 308, 408, 508) durch Schwenken einer der Antriebsvorrichtung (109, 209, 309, 509) zugehörigen Schubeinheit (121, 221, 321, 421, 521) verändert wird und wobei zur Umkehrung der Schubrichtung des Propellers (108, 208, 308, 408, 508) die schwenkbare Schubeinheit (121, 221, 321, 421, 521) um etwa 180° in die entgegen gesetzte Richtung geschwenkt wird, so dass bei einem Ausfall der elektrischen Maschine (105) das Manövrieren des Schiffes ausschließlich mit der Verbrennungskraftmaschine (103) erfolgt.

2. Verfahren nach Anspruch 1, **dadurch gekennzeichnet, dass** in einer elektronischen Steuerungseinheit eine aktuelle erste Stellung der Schubeinheit (121, 221, 321, 421, 521) erfasst wird und bei einer in die elektronische Steuerungseinheit eingegebenen Anforderung einer Schubrichtungsumkehr ausgehend von der aktuellen ersten Stellung der Schubeinheit diese um etwa 180° in eine entgegen gesetzte zweite Stellung geschwenkt wird.

3. Verfahren nach Anspruch 1 oder 2, **dadurch gekennzeichnet, dass** die Schubrichtung der Schubeinheit (121, 221, 321, 421, 521) mittels einer Rudereinrichtung eingestellt wird und die Anforderung einer Schubrichtungsumkehr mittels eines Fahrthebels (365) einer Steuerungseinrichtung (370) eingegeben wird.

4. Verfahren nach Anspruch 2 oder 3, **dadurch gekennzeichnet, dass** sich bei einer ersten Stellung der Schubeinheit (121, 221, 321, 421, 521) der Fahrthebel (365) in einem ersten Stellbereich (360) befindet und dass sich in der zweiten, der ersten um etwa 180° entgegen gesetzten Stellung der Schubeinheit (121, 221, 321, 421, 521) der Fahrthebel (365) in einem zweiten Stellbereich (361) befindet, wobei zum Herbeiführen der Schubrichtungsumkehr der Fahrthebel (365) ausgehend von der jeweiligen Stellung der Schubeinheit (121, 221, 321, 421, 521) über eine Mittelstellung (M) hinweg in den jeweils anderen Stellbereich bewegt wird.

5. Verfahren nach mindestens einem der Ansprüche 1, 2 oder 4, **dadurch gekennzeichnet, dass** während des Schwenkens der Schubeinheit (121, 221, 321, 421, 521) von der ersten in die zweite Stellung der Propeller (108, 208, 308, 408, 508) nicht angetrieben wird.

6. Verfahren nach Anspruch 5, **dadurch gekennzeichnet, dass** ausgehend von der ersten Stellung der Schubeinheit (121, 221, 321, 421, 521) beim Bewegen des Fahrthebels (365) von einem ersten (360) zu einem zweiten Stellbereich (361) bei Erreichen der Mittelstellung (M) die Schaltkupplung (115, 116, 319, 519) zur Unterbrechung des Propellerantriebs selbsttätig geöffnet wird und bei einem anschließenden Überfahren der Mittelstellung (M) in den zweiten Stellbereich (361) die Schubeinheit (121, 221, 321, 421, 521) in eine der ersten Stellung entgegen gesetzte zweite Stellung um etwa 180° verschwenkt wird, wobei die Schaltkupplung (115, 116, 319, 519) erst wieder geschlossen wird nachdem die Schubeinheit (121, 221, 321, 421, 521) die zweite Stellung eingenommen hat.

7. Verfahren nach Anspruch 4, **dadurch gekennzeichnet, dass** ausgehend von einer ersten Stellung der Schubeinheit (121, 221, 321, 421, 521) beim Bewegen des Fahrthebels (365) zu dem entgegen gesetzten Stellbereich die Drehzahl der Verbrennungskraftmaschine (103, 303) reduziert wird und in der Mittelstellung (M) des Fahrthebels (365) einen minimalen Wert annimmt, während die Schaltkupplung (319, 519) geöffnet ist, und dass bei einer weiteren Bewegung des Fahrthebels (365) in den entgegen gesetzten Stellbereich die Schubeinheit (121, 221, 321, 421, 521) zuerst in die entgegen gesetzte zweite Stellung geschwenkt wird und anschließend nach dem Schließen der Schaltkupplung (319, 519) je nach Auslenkung des Fahrthebels (365) im jeweiligen Stellbereich die Drehzahl der Verbrennungskraftmaschine (303) erhöht wird.

## Claims

1. Method for operating a hybrid drive system of a vessel, in particular of a sailing vessel, comprising an internal combustion engine (103, 303), an electric machine (105), wherein the electric machine (105) together with at least one clutch (115, 116) forms a drive unit, a drive device (109, 209, 309, 509) for transmitting the driving power to at least one propeller (108, 208, 308, 408, 508), wherein the drive device (109) together with the drive unit (140), power electronics (107) and a battery (106) forms an electric hybrid unit (101), an electric control unit (110) for controlling the internal combustion engine (103) and the electric hybrid unit (101), wherein the control unit (110) determines different operating modes of the hybrid drive system, wherein, when the direction of rotation of the electric machine (105) is reversed, the direction of travel of the vessel is reversed, **characterized in that**, by means of the drive device (109, 209, 309, 509) which is embodied as a ship's drive which can pivot about an essentially perpendicular steering axis (120, 220, 320, 420, 520), the direction of thrust of the propeller (108, 208, 308, 408, 508) is changed by pivoting a thrust unit (121, 221, 321, 421, 521) which is associated with the drive device (109, 209, 309, 509), and wherein in order to reverse the direction of thrust of the propeller (108, 208, 308, 408, 508), the pivotable thrust unit (121, 221, 321, 421, 521) is pivoted through approximately 180° in the opposite direction, with the result that in the event of failure of the electric machine (105) the vessel is manoeuvred exclusively with the internal combustion engine (103).

2. Method according to Claim 1, **characterized in that** in an electronic control unit the current first position of the thrust unit (121, 221, 321, 421, 521) is detected, and when a request to reverse the direction of thrust is input into the electronic control unit the thrust unit is pivoted through approximately 180° from the current first position into an opposite, second position.

3. Method according to Claim 1 or 2, **characterized in that** the thrust direction of the thrust unit (121, 221, 321, 421, 521) is set by means of a rudder device, and the request to reverse the direction of thrust is input by means of a control lever (365) of a control device (370).

4. Method according to Claim 2 or 3, **characterized in that** in a first position of the thrust unit (121, 221, 321, 421, 521) the control lever (365) is in a first actuation range (360), and **in that** in the second position of the thrust unit (121, 221, 321, 421, 521), which is opposite the first by approximately 180°, the control lever (365) is in a second actuation range (361), wherein in order to bring about the reversal of the direction of thrust the control lever (365) is moved from the respective position of the thrust unit (121, 221, 321, 421, 521) through a centre position (M) and into the respective other actuation range.

5. Method according to at least one of Claims 1, 2 or 4, **characterized in that** during the pivoting of the thrust unit (121, 221, 321, 421, 521) from the first position into the second position the propeller (108, 208, 308, 408, 508) is not driven.

6. Method according to Claim 5, **characterized in that** during the movement of the control lever (365) from a first actuation range (360) to a second actuation range (361) starting from the first position of the thrust unit (121, 221, 321, 421, 521), the clutch (115, 116, 319, 519) is opened automatically when the centre position (M) is reached, in order to interrupt the propeller drive, and when the centre position (M) is subsequently moved through into the second actuation range (361), the thrust unit (121, 221, 321, 421, 521) is pivoted through approximately 180° into a second position opposite the first position, wherein the clutch (115, 116, 319, 519) is not closed again until after the thrust unit (121, 221, 321, 421, 521) has assumed the second position.

7. Method according to Claim 4, **characterized in that** during the movement of the control lever (365) to the opposite actuation range starting from a first position of the thrust unit (121, 221, 321, 421, 521), the rotational speed of the internal combustion engine (103, 303) is reduced, and in the centre position (M) of the control lever (365) said rotational speed assumes a minimum value, while the clutch (319, 519) is opened, and **in that** during the further movement of the control lever (365) into the opposite actuation range the thrust unit (121, 221, 321, 421, 521) is first pivoted into the opposite second position and subsequently the rotational speed of the internal combustion engine (303) is increased after the closing of the clutch (319, 519) depending on the deflection of the control lever (365) in the respective actuation range.

## Revendications

1. Procédé pour le fonctionnement d'un système d'entraînement hybride d'un bateau, en particulier d'un bateau à voile, comprenant un moteur à combustion interne (103, 303), une machine électrique (105), la machine électrique (105) formant, conjointement avec au moins un embrayage (115, 116), une unité d'entraînement, un dispositif d'entraînement (109, 209, 309, 509) pour le transfert de la puissance d'entraînement à au moins une hélice (108, 208, 308, 408, 508), le dispositif d'entraînement (109), conjointement avec l'unité d'entraînement (140), une électronique de puissance (107) et une batterie (106), formant une unité hybride électrique (101), une unité de commande électrique (110) pour la commande du moteur à combustion interne (103) et de l'unité hybride électrique (101), l'unité de commande (110) déterminant différents modes de fonctionnement du système d'entraînement hybride, dans lequel, en cas d'inversion du sens de rotation de la machine électrique (105), le sens d'avance du bateau étant inversé, **caractérisé en ce qu'**au moyen du dispositif d'entraînement (109, 209, 309, 509) qui est réalisé sous forme d'entraînement de bateau pouvant pivoter autour d'un axe de commande essentiellement vertical (120, 220, 320, 420, 520), le sens de poussée de l'hélice (108, 208, 308, 408, 508) peut être changé par pivotement d'une unité de poussée (121, 221, 321, 421, 521) associée au dispositif d'entraînement (109, 209, 309, 509) et pour l'inversion du sens de poussée de l'hélice (108, 208, 308, 408, 508), l'unité de poussée pivotante (121, 221, 321, 421, 521) est pivotée d'environ 180° dans le sens opposé, de sorte que dans le cas d'une panne de la machine électrique (105), la manoeuvre du bateau s'effectue exclusivement avec le moteur à combustion interne (103).

2. Procédé selon la revendication 1, **caractérisé en ce que** dans une unité de commande électronique, une première position actuelle de l'unité de poussée (121, 221, 321, 421, 521) est détectée et dans le cas d'une demande d'une inversion du sens de poussée entrée dans l'unité de commande électronique à partir de la première position actuelle de l'unité de poussée, celle-ci est pivotée d'environ 180° dans une deuxième position opposée.

3. Procédé selon la revendication 1 ou 2, **caractérisé en ce que** le sens de poussée de l'unité de poussée (121, 221, 321, 421, 521) est ajusté au moyen d'un dispositif de gouvernail et la demande d'une inversion du sens de poussée est entrée au moyen d'un levier de commande (365) d'un dispositif de commande (370).

4. Procédé selon la revendication 2 ou 3, **caractérisé en ce que** dans le cas d'une première position de l'unité de poussée (121, 221, 321, 421, 521), le levier de commande (365) se trouve dans une première plage de réglage (360) et **en ce que** dans la deuxième position de l'unité de poussée (121, 221, 321, 421, 521) opposée à la première d'environ 180°, le levier de commande (365) se trouve dans une deuxième plage de réglage (361), le levier de commande (365), pour provoquer l'inversion du sens de poussée, étant déplacé à partir de la position respective de l'unité de poussée (121, 221, 321, 421, 521) au-delà d'une position centrale (M) dans l'autre plage de réglage respective.

5. Procédé selon au moins l'une quelconque des revendications 1, 2 ou 4, **caractérisé en ce que** pendant le pivotement de l'unité de poussée (121, 221, 321, 421, 521) de la première dans la deuxième position, l'hélice (108, 208, 308, 408, 508) n'est pas entraînée.

6. Procédé selon la revendication 5, **caractérisé en ce qu'**à partir de la première position de l'unité de poussée (121, 221, 321, 421, 521), lors du déplacement du levier de commande (365) d'une première (360) à une deuxième (361) plage de réglage, une fois la position centrale (M) atteinte, l'embrayage (115, 116, 319, 519) est ouvert automatiquement pour interrompre l'entraînement de l'hélice et dans le cas d'un dépassement subséquent de la position centrale (M) dans la deuxième plage de réglage (361), l'unité de poussée (121, 221, 321, 421, 521) est pivotée d'environ 180° dans une deuxième position opposée à la première position, l'embrayage (115, 116, 319, 519) étant seulement à nouveau fermé après que l'unité de poussée (121, 221, 321, 421, 521) a adopté la deuxième position.

7. Procédé selon la revendication 4, **caractérisé en ce qu'**à partir d'une première position de l'unité de poussée (121, 221, 321, 421, 521), lors du déplacement du levier de commande (365) dans la plage de réglage opposée, la vitesse de rotation du moteur à combustion interne (103, 303) est réduite et, dans la position centrale (M) du levier de commande (365), adopte une valeur minimale tandis que l'embrayage (319, 519) est ouvert, et **en ce que** dans le cas d'un mouvement supplémentaire du levier de commande (365) dans la plage de réglage opposée, l'unité de poussée (121, 221, 321, 421, 521) est d'abord pivotée dans la deuxième position opposée et ensuite, après la fermeture de l'embrayage (319, 519), en fonction de la déviation du levier de commande (365) dans la plage de réglage respective, la vitesse de rotation du moteur à combustion interne (303) est augmentée.
